# EUROPÄISCHE PATENTANMELDUNG

(11) **EP 2 437 128 A1**
(43) Veröffentlichungstag der Anmeldung: **04.04.2012**
(21) Anmeldenummer: 11007925.8
(22) Anmeldetag: 29.09.2011
(51) Int. Cl.: G05B 19/418, B65G 1/04, G05B 19/4155

(54) **Vorrichtung zum Ein- und Auslagern von Gütern**

(30) Priorität: 29.09.2010 DE 102010046873
(71) Anmelder: KHT Kommissionier- und Handhabungstechnik GmbH, 45881 Gelsenkirchen (DE)
(72) Erfinder: Geßner, Jürgen, 42781 Haan (DE)
(74) Vertreter: Tilmann, Max Wilhelm

(57) **Zusammenfassung**

Eine Vorrichtung zum Ein- und Auslagern von Artikeln, insbesondere von Arzneimittelpackungen weist mindestens ein Regal mit Lagerplätzen zur Lagerung der Artikel und mindestens ein durch eine Steuerung gesteuertes Regalbediengerät zum Ein- und Auslagern der Artikel in die/aus den Lagerplätzen auf und ist dadurch gekennzeichnet, dass das Regalbediengerät von der Steuerung von einem Stand-by-Zustand, in dem dieses von der Steuerung ansteuerbar aber für die Ein- und Auslagerung der Artikel nicht bereit ist, in einen Bereitschaftszustand, in dem dieses für die Ein- und Auslagerung der Güter bereit ist, schaltbar ist.

## Beschreibung

Die Erfindung betrifft eine Vorrichtung zum Ein- und Auslagern von Artikeln, insbesondere von Arzneimittelpackungen, mit mindestens einem Regal mit Lagerplätzen zur Lagerung der Artikel und mit mindestens einem durch eine Steuerung gesteuerten Regelbediengerät zum Ein- und Auslagern der Artikel in die Lagerplätze bzw. aus den Lagerplätzen.

Eine solche, regelmäßig auch als Kommissioniervorrichtung bezeichnete Vorrichtung ist beispielsweise aus der DE 195 09 951 C2 bekannt. Die dort offenbarte Kommissioniervorrichtung, die insbesondere zur automatischen, unsortierten Lagerung von kleinteiligen, quaderförmigen Artikeln, wie z.B. Arzneimittelpackungen, vorgesehen ist, weist eine Übergabevorrichtung in Form eines Förderbands auf, das sich innerhalb eines Regals zwischen zwei Regalböden erstreckt und die einzulagernden Artikel von einer Aufgabestation bis in den Arbeitsbereich eines Regalbediengeräts transportiert. Das Förderband führt dabei von der Schmalseite des Regals, an der eine Aufgabestation für die Artikel angeordnet ist, in den mit zahlreichen übereinander angeordneten Regalböden versehenen Regalbereich hinein. Die neu einzulagernden Artikel werden vor der Aufnahme durch das Regalbediengerät mittels eines Strichcode-Scanners identifiziert und gegebenenfalls hinsichtlich ihrer Abmessungen vermessen, so dass ein geeigneter Lagerplatz von einer Rechnersteuerung der Vorrichtung gefunden werden kann.

Ausgehend von diesem Stand der Technik lag der Erfindung die Aufgabe zugrunde, eine verbesserte Kommissioniervorrichtung anzugeben, die sich insbesondere durch einen geringeren Energieverbrauch auszeichnet.

Diese Aufgabe wird durch den Gegenstand des unabhängigen Patentanspruchs 1 gelöst. Vorteilhafte Ausgestaltungen sind Gegenstand der abhängigen Patentansprüche und ergeben sich aus der nachfolgenden Beschreibung der Erfindung.

Der Kern der Erfindung liegt darin, eine gattungsgemäße Vorrichtung so auszugestalten, dass ein Stand-by-Zustand des Regalbediengeräts ermöglicht wird. Dieser Stand-by-Zustand wird erfindungsgemäß von einer Steuerung der Vorrichtung, die u.a. auch das Regalbediengerät steuert, ausgelöst, so dass in Abhängigkeit von konkreten Regelungsparametern das Regalbediengerät von einem Stand-by-Zustand, in dem dieses von der Steuerung ansteuerbar aber für die Ein- und Auslagerung der Güter nicht bereit ist, in einen Bereitschaftszustand, in dem dieses für die Ein- und Auslagerung der Güter bereit ist, schaltbar ist.

Im Vergleich zu konventionellen Kommissioniervorrichtungen gibt es somit nicht nur einen Betriebszustand, in dem sämtliche Maschinenkomponenten hochgefahren und somit einsatzbereit sind, und einen ausgeschalteten Zustand, in dem die gesamte Kommissioniervorrichtung heruntergefahren und nicht betriebsbereit ist, sondern einen zusätzlichen Stand-by-Zustand, in dem einzelne Funktionselemente der Kommissioniervorrichtung und insbesondere eine ihrer Steuerungen in einem Betriebszustand sind, und andere, vorzugsweise energieintensive Funktionselemente, wie insbesondere das Regalbediengerät (und insbesondere auch dessen die Bewegungen steuernder Prozessrechner) zumindest teilweise abgeschaltet sind.

Durch die erfindungsgemäße Ausgestaltung einer Kommissioniervorrichtung wird ein Bereitschaftszustand geschaffen, in dem die Kommissioniervorrichtung einen geringeren Energieverbrauch aufweist, als in ihrem (inaktiven) Bereitschaftszustand, gleichzeitig jedoch durch das Inbetriebhalten relevanter, möglichst wenig energieintensiver Funktionselemente, vorzugsweise automatisch gesteuert und vorzugsweise in einem relativ kurzen Zeitraum wieder betriebsbereit sein kann.

Auf das Beispiel einer erfindungsgemäßen Kommissioniervorrichtung für den Einsatz in Verkaufsräumen und insbesondere in Apotheken bezogen, kann sich die erfindungsgemäße Kommissioniervorrichtung beispielsweise in ruhigen Verkaufszeiten, d.h. wenn für einen längeren Zeitraum kein Kundenkontakt mehr erfolgt ist oder voraussichtlich nicht erfolgen wird, automatisch (in Abhängigkeit bestimmter Regelungsparameter) oder auch manuell ausgelöst in einen Stand-by-Zustand schalten, wodurch der Energieverbrauch reduziert werden kann. Anders als bei einer vollständig abgeschalteten Kommissioniervorrichtung kann die erfindungsgemäße Kommissioniervorrichtung dann aufgrund einer vorzugsweise kurzen Schaltzeit von dem Stand-by-Zustand in den Bereitschaftszustand in einem vorzugsweise kurzen Zeitraum wieder vollständig betriebsbereit sein, d.h. dann, wenn ein Kunde den Verkaufsraum betritt, weil dann damit gerechnet werden muss, dass ein oder mehrere Artikel mittels des Regalbediengeräts ausgelagert werden sollen.

Über einen längeren Zeitraum, z.B. die Verkaufszeiten eines Tags, gesehen, kann sich die erfindungsgemäße Kommissioniervorrichtung durch einen erheblich verminderten Energieverbrauch im Vergleich zu konventionellen Kommissioniervorrichtungen auszeichnen, weil bei diesen vorgesehen ist, diese kurz vor dem Beginn der Verkaufszeiten hochzufahren, was in der Regel einige Minuten in Anspruch nimmt, und diese erst nach Beendigung der Öffnungszeiten wieder herunterzufahren, was ebenfalls einige Minuten in Anspruch nehmen kann. Während der Öffnungszeiten werden konventionelle Kommissioniervorrichtungen somit ständig im vollen Betriebszustand gehalten, selbst dann, wenn diese -insbesondere in ruhigen Verkaufszeiten - für einen längeren Zeitraum bereits inaktiv waren und/oder voraussichtlich noch für einen längeren Zeitraum inaktiv sein werden. Ein Herunterfahren konventioneller Kommissioniervorrichtungen in ruhigen Verkaufszeiten wäre zwar grundsätzlich möglich, wird jedoch nicht durchgeführt, weil die Vorrichtung im Bedarfsfall aufgrund der relativ langen Hoch- und Herunterfahrzeiten nicht rechtzeitig betriebsbereit wäre. Einem Kunden wäre es nicht zuzumuten, ca. 5 bis 10 Minuten auf die bestellte Arzneimittelpackung zu warten, weil die Kommissioniervorrichtung der Apotheke aus Energiespargründen zuvor heruntergefahren wurde.

In einer bevorzugten Ausführungsform der erfindungsgemäßen Kommissioniervorrichtung kann vorgesehen sein, dass - neben dem Regalbediengerät - weitere Funktionselemente von der Steuerung von einem Stand-by-Zustand in einen Bereitschaftszustand - und umgekehrt - schaltbar sind. Dadurch kann der Energieverbrauch der Kommissioniervorrichtung weiter optimiert werden.

Besonders bevorzugt kann vorgesehen sein, das Regalbediengerät und die weiteren Funktionselemente in (zwei oder mehr) Gruppen zu sortieren, wobei die Gruppen sich u.a. in ihrer Schaltzeit zum Schalten vom Stand-by-Zustand im Bereitschaftszustand und/oder vom Bereitschaftszustand in den Stand-by-Zustand unterscheiden können.

Diese Schaltzeit kann beispielsweise ≤10 Sekunden, insbesondere jedoch höchstens 5 Sekunden bei einer ersten Gruppe und >10 Sekunden, insbesondere höchstens 60 Sekunden bei einer zweiten Gruppen betragen. Dadurch wird ermöglicht, mindestens zwei Betriebszustände der Kommissioniervorrichtung vorzusehen, wobei in einem ersten Betriebszustand die Funktionselemente der ersten Gruppe in einen Stand-by-Zustand geschaltet sind und in einem zweiten Betriebszustand die Funktionselemente der zweiten Gruppe ebenfalls in dem Stand-by-Zustand geschaltet sind. Diese Ausgestaltung ermöglicht beispielsweise, Funktionselemente, die sich durch ein schnelles Hochfahren bis zu ihrem jeweiligen Bereitschaftszustand auszeichnen, der ersten Betriebsgruppe zuzuordnen. Diese Funktionselemente können erfindungsgemäß häufig und insbesondere nach einem kurzen Zeitraum der Inaktivität der Kommissioniervorrichtung in den Stand-by-Zustand geschaltet werden, da deren Hochfahren in den Bereitschaftszustand nur eine kurze Zeitspanne in Anspruch nimmt. Die Funktionselemente der zweiten Gruppe, die insbesondere auch das Regalbediengerät und dessen Prozessrechner umfassen kann, können erfindungsgemäß unter anderen Bedingungen und insbesondere erst nach einer längeren Inaktivität oder vor einer erwarteten längeren Inaktivität der Kommissioniervorrichtung in den Stand-by-Zustand geschaltet werden.

Erfindungsgemäß muss jedoch nicht jedes Funktionselement die der jeweiligen Gruppe zugeordnete maximale Schaltzeit aufweisen, sondern insbesondere kann es auch sinnvoll sein, die Funktionselemente zusätzlich beispielsweise funktional zu sortieren. Beispielsweise kann ein Netzteil eines Steuerungsrechners zwar eine erheblich schnellere Schaltzeit als der Steuerungsrechner selbst aufweisen; diese beiden Funktionselemente in unterschiedliche Gruppen zu sortieren wäre jedoch nicht möglich, da ein Abschalten des Netzteils unweigerlich auch zu einem Abschalten des Steuerungsrechners führen würde. Diese funktionale und/oder schaltungstechnische Sortierung der Funktionselemente kann auch unabhängig von den gewählten Gruppen und insbesondere auch dann, wenn gar keine Gruppen erzeugt werden, erfolgen.

Das Schalten des Regalbediengeräts und/oder der weiteren Funktionselemente kann von beliebigen Bedingungen abhängen. Hierunter fallen nicht nur definierte Zeitspannen, insbesondere der Inaktivität des Regelbediengeräts oder der Kommissioniervorrichtung, sondern insbesondere auch die Uhrzeit und/oder die Signale von Sensoren.

Ein uhrzeitbasiertes Schalten des Regalbediengeräts und/oder weiterer Funktionselemente in den Stand-by-Zustand kann beispielsweise vorsehen, zu bestimmten Uhrzeiten, die bekannterweise ruhige Verkaufszeiten darstellen, den Stand-by-Zustand auszulösen, so dass hierfür beispielsweise nicht erst eine definierte Zeitspanne der Inaktivität abgewartet werden muss.

Eine besonders bevorzugte Ausführungsform der erfindungsgemäßen Kommissioniervorrichtung sieht vor, das Schalten der Funktionselemente von einem Türsensor eines Verkaufsraums, insbesondere einer Apotheke, abhängig zu machen. Insbesondere kann vorgesehen sein, diejenigen Funktionselemente, die für das Hochfahren aus ihrem Stand-by-Zustand in den Bereitschaftszustand eine relativ lange Zeitspanne benötigen (d.h. insbesondere die Funktionselemente der zweiten Gruppe), hochzufahren, sobald eine Person den Verkaufsraum betritt, weil damit gerechnet werden muss, dass diese Person einen Artikel nachfragen wird, der dann möglichst kurzfristig mittels der Kommissioniervorrichtung ausgegeben werden soll. Diejenigen Funktionselemente, die dagegen sehr schnell und insbesondere in wenigen Sekunden von dem Stand-by-Zustand in den Bereitschaftszustand versetzt werden können, werden dagegen vorzugsweise von dem Türsensor nicht beeinflusst, da für diese abgewartet werden kann, ob die Person, die den Verkaufsraum betreten hat, tatsächlich einen mittels der Kommissioniervorrichtung auszugebenden Artikel anfordern wird. Auf das Schalten vom Stand-by- in den Bereitschaftszustand kann somit gewartet werden, bis tatsächlich eine Anforderung eines oder mehrerer Artikel erfolgt. Eine Wartezeit von einigen Sekunden kann dabei in der Regel in Kauf genommen werden.

Als "Türsensor" wird erfindungsgemäß ein beliebiger Sensor angesehen, der ein Betreten oder eine Anwesenheit einer Person erkennen kann. Dieser muss nicht zwangsläufig physisch oder funktionell mit einer Tür gekoppelt sein.

Nachdem das angeforderte Stückgut von der Kommissioniervorrichtung ausgelagert wurde, können - der erfindungsgemäßen Idee folgend - diejenigen Funktionselemente (vorzugsweise diejenigen der ersten Gruppe) wieder kurzfristig in den Stand-by-Zustand geschaltet werden, da diese selbst dann, wenn unmittelbar darauf - ggf. von demselben Kunden - erneut eine Anforderung eines Artikels erfolgt, wieder in derselben kurzen Zeit, vorzugsweise innerhalb von wenigen Sekunden, betriebsbereit sind. Die anderen Funktionselemente (vorzugsweise der zweiten Gruppe), deren Schalten ggf. einen längeren Zeitraum beansprucht, werden dagegen vorzugsweise nicht direkt wieder in den Stand-by-Zustand geschaltet, da ja nicht ausgeschlossen werden kann, dass eine weitere Anforderung eines Artikels erfolgen wird. Für diese Funktionselemente kann vorgesehen sein, eine relativ lange Zeitspanne einer Inaktivität vorzusehen, bevor diese wieder in den Stand-by-Zustand geschaltet werden. Alternativ oder zusätzlich kann auch vorgesehen sein, das Schalten dieser Funktionselemente in den Stand-by-Zustand wiederum an das Signal eines Sensors, insbesondere eines Türsensors zu koppeln, der das Heraustreten der Personen aus dem Verkaufsraum erkennt und dies an die Steuerung der Kommissioniervorrichtung übermittelt.

Vorzugsweise kann vorgesehen sein, dass bestimmte Funktionselemente, insbesondere diejenigen, die nicht den definierten Gruppen zugeordnet sind, von der Steuerung nicht selbständig in einen Stand-by-Zustand schaltbar sind. Hierzu sollen insbesondere sicherheitsrelevante Bauteile gezählt werden, bei denen sichergestellt werden soll oder muss, dass diese lediglich manuell durch eine Bedienperson beeinflusst werden können.

Selbstverständlich besteht die Möglichkeit, die Steuerung der Kommissioniervorrichtung ebenfalls (zumindest teilweise) in einen Stand-by-Zustand schaltbar auszuführen, da diese regelmäßig ebenfalls einen nicht unerheblichen Energieverbrauch aufweist. Die Steuerung kann somit auch aus mehreren Steuerungen bestehen, die ggf. für die Steuerung unterschiedlicher Funktionselemente vorgesehen sind. Unter Umständen besteht die Möglichkeit, alle Steuerungselemente der Steuerung bis auf eines in den Stand-by-Zustand zu schalten und das verbliebene Steuerungselement für die Reaktivierung einzelner oder aller anderen Steuerungselemente zu verwenden.

Selbstverständlich müssen erfindungsgemäß nicht alle funktionsidentischen Funktionselemente gleich behandelt werden. Beispielsweise kann ein Teil einer Beleuchtung der Kommissioniervorrichtung ausgeschaltet werden, während ein anderer Teil als Notbeleuchtung weiter im Betrieb gehalten wird.

In Abhängigkeit des jeweiligen Funktionselements kann der Stand-by-Zustand identisch oder anders als der abgeschaltete Zustand sein. Beispielsweise bei einer Lampe der Kommissioniervorrichtung können beide Zustände identisch sein, während sich der Stand-by-Zustand eines Steuerungsrechners durch die weiterhin gegebene Betriebsbereitschaft einzelner Elemente von dem abgeschalteten Zustand unterscheidet.

Die Erfindung wird nachfolgend anhand eines in den Zeichnungen dargestellten Ausführungsbeispiels näher erläutert.

In den Zeichnungen zeigt:

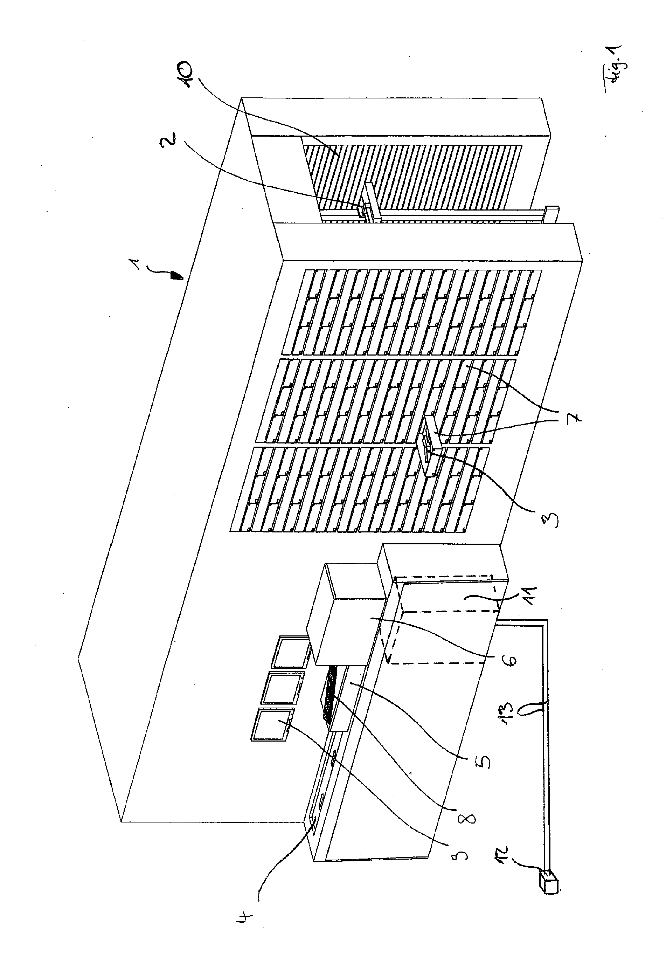

- Fig.1:: eine erfindungsgemäße Kommissioniervorrichtung in einer isometrischen Ansicht.

Die Fig. 1 zeigt in einer isometrischen Ansicht eine erfindungsgemäße Kommissioniervorrichtung für Arzneimittelpackungen. Diese umfasst ein Lager, das als verkleidetes, doppelreihiges Regallager 1 ausgebildet ist. Zwischen den zwei Regalreihen ist ein Bewegungsraum für ein Regalbediengerät 2 vorgesehen. Das Regalbediengerät 2 dient unter anderem dazu, Arzneimittelpackungen 3 in Vorratslagerplätzen 10 des Regallagers 1 einzulagern oder aus diesen auszulagern. Ein Einlagern erfolgt durch ein Ablegen einer neu gelieferten Arzneimittelpackung 3 auf einem Förderband 4, das die Arzneimittelpackung 3 dann durch einen Scanbereich 5 fährt, in der der auf der Arzneimittelpackung 3 abgedruckte Strichcode gescannt wird; die dadurch erfolgte Identifizierung ermöglicht, einen passenden Vorratslagerplatz in dem Regallager 1 aufzufinden oder die Arzneimittelpackung 3 direkt einem vorab bereits gespeicherten Auftrag zuzuordnen.

Nach dem Scannen wird die Arzneimittelpackung 3 weiter in einen Aufnahmebereich 6 des Regalbediengeräts 2 transportiert, wo diese von dem Regalbediengerät 2 aufgenommen und weiter transportiert werden kann. Ein Auslagern einzelner Arzneimittelpackungen 3 kann ebenfalls mittels des Regalbediengeräts 2 erfolgen; die Arzneimittelpackung wird dabei zu einer Ausgabestation (nicht dargestellt) transportiert und dort über eine Rutsche ausgegeben; dort kann sie manuell entnommen werden. Zusätzlich sind eine Vielzahl von Auslagerplätzen vorgesehen, die als Schubladen 7 in die vordere Außenwand des Regallagers 1 integriert sind. In diesen Schubladen 7 können insbesondere einzelnen Aufträge aus verschiedenen Arzneimittelpackungen 3 (vor-)kommissioniert und dann auf einmal ausgegeben werden.

Eine Steuerung 11 der Kommissioniervorrichtung kann über ein Eingabegerät, das in Form einer Tastatur 8 sowie mehrerer berührungsempfindlicher Bildschirme 9 vorgesehen ist, manuell beeinflusst werden. Über dieses Eingabegerät können auch die Aufträge eingegeben oder verändert werden.

Die Kommissioniervorrichtung ist erfindungsgemäß so ausgestaltet, dass einzelne Funktionselemente von einem Bereitschaftszustand in einen Stand-by-Zustand - und anders herum - schaltbar sind. Diese Funktionselemente umfassen insbesondere das Regalbediengerät 2 einschließlich seines Prozessrechners (nicht dargestellt), der dessen Bewegungen anhand der Signale der Steuerung 11 der Kommissioniervorrichtung steuert, sowie die Scaneinheiten des Scanbereichs 5 und die Bildschirme 9. Diese Funktionselemente sind steuerungstechnisch in zwei Gruppen eingeteilt, die sich u.a. hinsichtlich ihrer maximalen Schaltzeit von dem Stand-by-Zustand in den Bereitschaftszustand unterscheiden.

Der ersten Gruppen gehören die Scaneinheiten des Scanbereichs 5, die Bildschirme 9 sowie eine (nicht dargestellte) Beleuchtung der Kommissioniervorrichtung an. Diese Funktionselemente können innerhalb eines sehr kurzen Zeitraums, z.B. innerhalb von maximal 3 Sekunden von dem Stand-by-Zustand in den Bereitschaftszustand geschaltet werden, beispielsweise, indem eine Taste der Tastatur 8 betätigt wird oder eine Arzneimittelpackung 3 auf dem Förderband 4 abgelegt wird. Das Regalbediengerät 2 gehört der zweiten Gruppe an, weil dessen Schalten vom Stand-by- in den Bereitschaftszustand relativ lange und insbesondere ca. 30 Sekunden oder auch länger benötigt.

Die Schaltung der Funktionselemente der beiden Gruppen erfolgt u.a. zeitabhängig und das sowohl uhrzeit- als auch zeitspannenabhängig. Dabei ist vorgesehen, die Funktionselemente der ersten Gruppe bereits nach einer kurzen Zeitspanne von beispielsweise 30 Sekunden der Inaktivität der Kommissioniervorrichtung (oder auch des jeweiligen Funktionselements) von dem Bereitschaftszustand in den Stand-by-Zustand zu schalten. Dies ist für den laufenden Betrieb wegen der schnellen (entgegengesetzten) Schaltzeit unproblematisch. Die Funktionselemente der zweiten Gruppe, d.h. insbesondere das Regalbediengerät 2 werden dagegen erst nach einem relativ langen Zeitraum der Inaktivität in den Stand-by-Zustand geschaltet.

Die uhrzeitabhängig Schaltung sieht vor, die Funktionselemente beider Gruppen zu bestimmten Uhrzeiten, die erfahrungsgemäß als sehr ruhige Verkaufszeiten (darunter kann auch eine Mittags- oder sonstige Pause der Apotheke fallen) automatisch in den Stand-by-Zustand zu schalten, sofern sie sich nicht bereits darin befinden oder - wegen einer bereits erfolgten Anforderung einer Arzneimittelpackung 3 oder einer zu erwarteten Anforderung - im Bereitschafts- oder Betriebszustand befinden sollen bzw. müssen.

Die dargestellte Kommissioniervorrichtung wird regelmäßig in einem Nebenraum eines Verkaufsraums einer Apotheke aufgestellt sein. Die Eingangs- und Ausgangstür (nicht dargestellt) des Verkaufsraums (nicht dargestellt) ist mit einem Türsensor 12 (schematisch dargestellt) versehen, der ein Eintreten und ggf. auch ein Heraustreten einer Person in den bzw. aus dem Verkaufsraum erkennt und diese Information über Signalkabel 13 oder auch kabellos (z.B: per Funk) an die Steuerung 11 übermittelt. Die Information einer eintretenden Person führt dazu, dass die Funktionselemente der zweiten Gruppe direkt in den Bereitschaftszustand geschaltet werden, was ja eine gewisse Zeit in Anspruch nimmt, so dass sichergestellt ist, dass die Kommissioniervorrichtung in einem sehr kurzen Zeitraum betriebsbereit ist, sofern die Auslagerung einer oder mehrerer Arzneimittelpackungen 3 aufgrund eines Auftrags der Person erfolgen wird. Ein Schalten der Funktionselemente der ersten Gruppe in den Bereitschaftszustand ist dagegen nicht an die Information einer eintretenden Person gekoppelt, weil aufgrund der sehr schnellen Schaltzeit abgewartet werden kann, ob die Person tatsächlich einen Auftrag erteilt, der eine Auslagerung durch die Kommissioniervorrichtung erfordert.

Sofern mittels des Türsensors 12 ein Heraustreten eines letzten Kunden aus dem Verkaufsraum erkannt werden kann, kann vorgesehen sein, die Funktionselemente einer oder beider Gruppen wieder in den Stand-by-Zustand zu schalten (sofern nicht bereits erfolgt), was bei den Funktionselementen der zweiten Gruppe insbesondere dann sinnvoll sein kann, wenn die Schaltung in den Bereitschaftszustand zu einem Zeitpunkt erfolgt ist, in dem von der Steuerung 11 uhrzeitbedingt eigentlich ein Stand-by-Zustand vorgesehen ist.

## Patentansprüche

1. Vorrichtung zum Ein- und Auslagern von Artikeln, insbesondere von Arzneimittelpackungen (3), mit mindestens einem Regal mit Lagerplätzen zur Lagerung der Artikel und mit mindestens einem durch eine Steuerung (11) gesteuerten Regalbediengerät (2) zum Ein- und Auslagern der Artikel in die/aus den Lagerplätzen, **dadurch gekennzeichnet, dass** das Regalbediengerät (2) von der Steuerung (11) von einem Stand-by-Zustand, in dem dieses von der Steuerung (11) ansteuerbar aber für die Ein- und Auslagerung der Artikel nicht bereit ist, in einen Bereitschaftszustand, in dem dieses für die Ein- und Auslagerung der Güter bereit ist, schaltbar ist.

2. Vorrichtung gemäß Anspruch 1, **gekennzeichnet durch** weitere Funktionselemente, die von der Steuerung (11) von einem Stand-by-Zustand in einen Bereitschaftszustand schaltbar sind.

3. Vorrichtung gemäß Anspruch 2, **dadurch gekennzeichnet, dass** das Regalbediengerät (2) und weitere Funktionselemente in Gruppen sortiert sind, wobei die Gruppen sich in ihrer Schaltzeit zum Schalten vom Stand-by-Zustand in den Bereitschaftszustand unterscheiden.

4. Vorrichtung gemäß Anspruch 3 **dadurch gekennzeichnet, dass** die Schaltzeit einer ersten Gruppe ≤10 Sekunden und insbesondere höchstens 5 Sekunden und die Schaltzeit einer zweiten Gruppe >10 Sekunden und insbesondere höchstens 60 Sekunden beträgt.

5. Vorrichtung gemäß Anspruch 4 **dadurch gekennzeichnet, dass** ein erster Betriebszustand, in dem die Funktionselemente der ersten Gruppe in einen Stand-by-Zustand geschaltet sind, und ein zweiter Betriebszustand, in dem zusätzlich die Funktionselemente der zweiten Gruppe in einen Stand-by-Zustand geschaltet sind, vorgesehen ist.

6. Vorrichtung gemäß Anspruch 3 bis 5, **dadurch gekennzeichnet, dass** Funktionselemente, die keiner der Gruppen zugeordnet sind, von der Steuerung nicht selbsttätig in einen Stand-by-Zustand schaltbar sind.

7. Vorrichtung gemäß einem der vorhergehenden Ansprüche, **dadurch gekennzeichnet, dass** das Schalten des Regalbediengeräts und/oder weiterer Funktionselemente von zusätzlichen Bedingungen, insbesondere der Uhrzeit, einer definierten Zeitspanne und/oder Sensorsignalen abhängt.

8. Vorrichtung gemäß Anspruch 6, **dadurch gekennzeichnet, dass** das Regalbediengerät in Abhängigkeit eines Signals eines Türsensors (12) eines Verkaufsraums, insbesondere einer Apotheke, von dem Stand-by-Zustand in den Bereitschaftszustand schaltbar ist.

9. Vorrichtung gemäß einem der vorhergehenden Ansprüche, **dadurch gekennzeichnet, dass** das Regalbediengerät (2) nach dem Ablauf einer definierten zeitlichen Inaktivität von dem Bereitschaftszustand in den Stand-by-Zustand geschaltet wird.

10. Vorrichtung gemäß Anspruch 8 oder 9, **dadurch gekennzeichnet, dass** mittels des Türsensors (12) die Funktionselemente der zweiten Gruppe von dem Stand-by-Zustand in den Bereitschaftszustand geschaltet werden und die Funktionselemente der ersten Gruppe in dem Stand-by-Zustand verbleiben.

11. Vorrichtung gemäß Anspruch 10, **dadurch gekennzeichnet, dass** die Funktionselemente der ersten Gruppe nach der Anforderung eines Artikels von dem Stand-by-Zustand in den Bereitschaftszustand geschaltet werden.

12. Vorrichtung gemäß Anspruch 11, **dadurch gekennzeichnet, dass** die Funktionselemente der ersten Gruppe nach Ablauf einer ersten Zeitspanne und die Funktionselemente der zweiten Gruppe nach Ablauf einer zweiten, längeren Zeitspanne von dem Bereitschaftszustand in den Stand-by-Zustand geschaltet werden.
